# EUROPEAN PATENT SPECIFICATION

(11) **EP 3 811 779 B1**
(45) Date of publication and mention of the grant of the patent: **21.08.2024**
(21) Application number: 20202117.6
(22) Date of filing: 15.10.2020
(51) Int. Cl.: A01M 29/32

(54) **REPELLING DEVICE FOR WINGED ANIMALS**
ABWEHRVORRICHTUNG FÜR VÖGEL
DISPOSITIF RÉPULSIF POUR ANIMAUX À AILES

(30) Priority: 21.10.2019 IT 201900019382
(43) Date of publication of application: 28.04.2021
(73) Proprietor: O.S.D. Gruppo Ecotech S.R.L., 41011 Campogalliano (Modena) (IT)
(72) Inventor: GAIBOTTI, Paolo, 41011 CAMPOGALLIANO (MO) (IT)
(74) Representative: Corradini, Corrado

(56) References cited:
- EP-A2- 2 014 162
- DE-A1- 102016 105 499
- DE-U1- 202010 012 262

## Description

### TECHNICAL FIELD

The present invention relates to the field of repelling devices adapted to prevent winged animals in general from resting and stopping on cornices, gutters and the like.

In particular, the invention relates to a repelling device of the static mechanical type.

### PRIOR ART

Repelling devices are known, of the static mechanical type, which are placed resting on and possibly fixed to surfaces of gutters, cornice, balconies and the like in order to prevent winged animals, such as pigeons, being able to rest and stop on said surfaces.

Such repelling devices generally comprise a support base that is rested on and possibly fixed to the aforesaid surfaces, and a plurality of repelling elements that are associated in a removable way with the support base.

Such repelling elements are generally obtained by bending a metal rod to form a structure with a substantially flared U shape, i.e. so as to have a substantially rectilinear base section and two opposite and diverging tips that rise from the base section and that are maintained spontaneously and elastically in an undeformed configuration, wherein said tips are at a certain mutual distance so that between them a fixed opening angle is defined. Such repelling elements are then associated with the support base so that the tips project vertically from the upper surface thereof, substantially forming a barrier that prevents winged animals from having available a rest surface.

To improve such barrier effect, within the context of such mechanical repelling devices, it is known to couple two repelling elements with the respective base sections substantially in a cross arrangement so as to obtain at the top a more dense barrier of tips and minimise passage gaps through which the winged animals could possibly pass.

To do this, the support base is provided with a housing seat obtained in the lower surface of the support base, which is adapted to house the base sections of a first repelling element and a second repelling element, and is configured so that said base sections are mutually transversal and overlapping.

Two pairs of through slots are associated with this housing seat which lead to the upper surface of the support base, each of which is adapted to house the tips of the first or respectively of the second repelling element.

Furthermore, each pair of slots is configured so that when the repelling element is associated with it, between the tips of the latter a smaller angle than the opening angle defined by them in the undeformed configuration is defined.

In this way, the tips of the repelling elements, attempting to return elastically to the undeformed configuration, press on an inner surface of the respective slot at the height at which the upper surface of the support base is placed, thus fixing the position of the repelling element. Such a repelling device is for example described in EP 2 014 162 A2 or DE202010012262.

However, with the repelling elements associated with the support base as described above, the distance between the base section of the first repelling element and the upper surface of the support base is less than the distance between said upper surface of the support base and the base section of the second repelling element, therefore the tips of the first repelling element generally form a different angle with respect to the tips of the second repelling element.

It follows that the first repelling element, when fixed to the support base, can be slightly unstable, i.e. at least slightly oscillating/tilting at least with respect to the vertical lying plane thereof, so potentially the winged animal could be able to move it and cross the barrier, substantially making the presence of the repelling device useless.

It is an object of the present invention to resolve said drawback of the known technique within the scope of a simple, rational and affordable solution.

Such object is achieved by the features of the invention indicated in the independent claim. The dependent claims outline preferred and/or particularly advantageous aspects of the invention.

### DISCLOSURE OF THE INVENTION

The invention particularly makes available a repelling device of winged animals according to claim 1, particularly comprising:
- a support base, elongated along a longitudinal axis and comprised of a plurality of portions made in an integral body that are distributed one after the other along such longitudinal axis, said support base being provided with a lower resting surface and an opposing free upper surface;
- a plurality of repelling elements, each of which has a substantially rectilinear base section and two opposite and mutually diverging tips which rise from the base section, said repelling elements being adapted to be associated with the support base so that the tips project upwards from the upper surface of the support base itself;

and wherein each portion is provided with:
   - a housing seat obtained in the lower surface of the support base and adapted to house the base sections of a first repelling element and of a second repelling element arranged mutually transversally and overlapping, with the base section of the first repelling element proximal to the upper surface and the base section of the second repelling element distal from said upper surface, and with
   - two pairs of slots, each of which extends in a through way from the upper surface of the support base to the housing seat, wherein each pair of slots is associated with a respective repelling element, the tips of which are individually inserted into a respective slot of the corresponding pair of slots,
characterised in that each portion comprises a pair of reliefs that extend in height starting from the upper surface of the support base, each relief being placed at a respective slot of the pair of slots associated with the first repelling element and defining an extension of the respective slot itself, making available a rest and contact surface of a portion of the tip inserted into it, said rest and contact surface for the respective tip of the first repelling element placed at a higher height with respect to the upper surface of the support base and in that each slot of the pair of slots associated with the second repelling element is adapted to make available a rest and contact surface for the respective tip, the rest and contact surface for the respective tip of the second repelling element being placed at a height where the upper surface of the support base is placed at the slot.

Thanks to such solution, a repelling device is made available that also guarantees the stability of the position of the first repelling element, i.e. of the repelling element whose base section is proximal to the upper surface of the support base.

In fact, thanks to the creation of reliefs at the through slots adapted to house the tips of the first repelling element, the mutual contact point is advantageously moved above the upper surface of the support base, deforming the first repelling element more which is therefore locked more stably, without the possibility to oscillate or tilt.

More precisely, the reliefs are configured so as to contact the tips of the first repelling element at the same maximum contact height at which the tips of the second repelling element are contacted within the respective slots, where maximum contact height means the distance, along an orthogonal direction to the lower surface of the support base, between the base section of each repelling element and the point of contact of the respective tips with respect to the reliefs and the slots of the support base.

Furthermore, the first repelling element and the second repelling element, when associated with the support base, are arranged to form the same angle between the respective tips.

Thanks to this, the first repelling element and the second repelling element are arranged equally and fixed stably to the support base.

Furthermore, the repelling element has a simple and repetitive geometric structure, formed by the succession of portions that form the support base, which are identical to one another, which allows, by simply varying during the design step the number of repetitions of said portions, the total length of the support base and therefore of the repelling device to be varied, allowing simple adaptability of the product to different needs.

An aspect of the invention envisages that each portion can comprise a further housing seat obtained in the lower surface of the support base and adapted to house the base section of a third repelling element, and a further pair of through slots each of which extends from the upper surface of the support base to the housing seat and is adapted to house a respective tip of the third repelling element.

Thanks to such solution, each portion of the support base can be associated with a plurality of repelling elements, e.g. three, thus allowing a dense barrier to be created which makes the repelling effect on the winged animal particularly effective.

A further aspect of the invention envisages that the third repelling element, when associated with the portion, can be arranged so that a tip of the first repelling element is at least partially interposed between the tips of the third repelling element itself.

Thanks to such solution, the third repelling element, when associated with the portion, i.e. with the support base, is arranged so that the passage opening defined between the third repelling element itself and the first repelling element is minimized, preventing the possibility of a winged animal being able to get through by crossing the gap between said repelling elements.

Furthermore, another aspect of the invention envisages that the tip of the first repelling element associated with a respective portion and that is distal from the third repelling element associated with the portion itself, can be at least partially interposed between the tips of the first repelling element and of the third repelling element associated with an adjacent portion.

Thanks to such solution, the repelling device is particularly effective, in fact thanks to the structure created through the aforesaid arrangement of the repelling elements a barrier is made available that is substantially free from passage clearances through which a winged animal could pass.

Again, another aspect of the invention envisages that each portion can comprise at least one groove through a lowered zone of the support base, adapted to house a connection element for fixing the support base to the support surface.

Thanks to such solution, the support base, already in the design and creation step, is arranged to be fixed to the support surface with which it is intended to be associated and does not require any subsequent processing for that purpose.

A further aspect of the invention envisages that said groove can be created in an axially interposed position, with respect to such longitudinal axis of the support base, between the housing seat of the base section of the third repelling element and the housing seat of the base sections of the first and of the second repelling element.

Thanks to such solution, the repelling device is arranged to be fixed to the support surface for which it is intended, at the repelling elements of each portion, thus making the position of the support base particularly stable and firm.

According to another aspect of the invention, the connection element can comprise cyanoacrylate.

Thanks to such solution, the support base can be fixed to the support surface for which it is intended by means of an adhesive connection element widely available on the market in various forms, e.g. in the form of silicone, and particularly resistant to the atmospheric agents to which the repelling device is exposed.

Furthermore, thanks to the creation of said slots, the cyanoacrylate as well as at the interface between the lower surface of the support base and the support surface, has a further large interface surface that makes the connection between the support base and the support surface particularly firm and stable over time.

Another aspect of the invention envisages that between two contiguous portions there may be a notch with a full transverse extension that extends starting from the lower surface.

Thanks to such solution, the notches provide weakening zones of the support base that allow greater flexibility thereof to be obtained and therefore better adaptability to the shape of the support surfaces for which it is intended.

Another aspect of the invention envisages that the support base can comprise a head portion, a tail portion and a plurality of intermediate portions, and wherein the head portion and the tail portion have snap coupling elements for the connection to further support bases.

Thanks to such solution, the repelling device is modular, i.e. various support bases with the related repelling elements can be connected to form a more complex structure, within the context of a particularly simple and intuitive solution.

A further aspect of the invention envisages that each portion can further comprise a plurality of recesses open at the lower surface and closed at the top.

Thanks to such solution, the support base makes available further housing seats for the connection element, e.g. for the silicone or other cyanoacrylate form, which further enables the fixing and seal over time of the connection to the support surface to be improved. The invention further provides a support base for a plurality of repelling elements according to claim 11. Each repelling element has a substantially rectilinear base section and two opposite and mutually diverging tips that rise from the base section, said repelling elements being adapted to be associated with the support base so that the tips project upwards from the upper surface of the support base itself, said support base being elongated along a longitudinal axis and comprised of a plurality of portions created in an integral body that are distributed one after the other along such longitudinal axis, said support base being provided with a lower resting surface and an opposing free upper surface;
and wherein each portion of the support base is provided with:
   - a housing seat obtained in the lower surface and adapted to house the base sections of a first repelling element and of a second repelling element so that they are arranged mutually transversally and overlapping, with the base section of the first repelling element proximal to the upper surface and the base section of the second repelling element distal from said upper surface, and with
   - two pairs of slots, each of which extends in a through way from the upper surface of the support base to the housing seat, wherein each pair of slots is adapted to be associated with a respective repelling element, the tips of which are adapted to be individually inserted into a respective slot of the corresponding pair of slots,
characterised in that each portion comprises a pair of reliefs that extend in height starting from the upper surface of the support base, each relief being placed at a respective slot of the pair of slots adapted to be associated with the first repelling element defining an extension of the respective slot itself, and adapted to make available a rest and contact surface of a portion of the tip adapted to be inserted into it, said rest and contact surface being placed at a higher height with respect to the upper surface of the support base.

Thanks to such solution, the reliefs of the support base are adapted to contact the first repelling element at a higher height than the height at which the upper surface of the support base is placed, allowing the position of the first repelling element to be firmly fixed and any possible oscillation/tilting thereof to be overcome.

### BRIEF DESCRIPTION OF THE DRAWINGS

Further features and advantages of the invention will be more apparent after reading the following description provided by way of a non-limiting example, with the aid of the accompanying drawings.
Figure 1 is a lateral front view of a repelling device according to the invention, comprising a support base and a plurality of repelling elements associated therewith, and an enlargement in which two consecutive portions of the support base are visible with the respective repelling elements associated therewith.
Figure 2 is a perspective view from below of the support base of the repelling device of

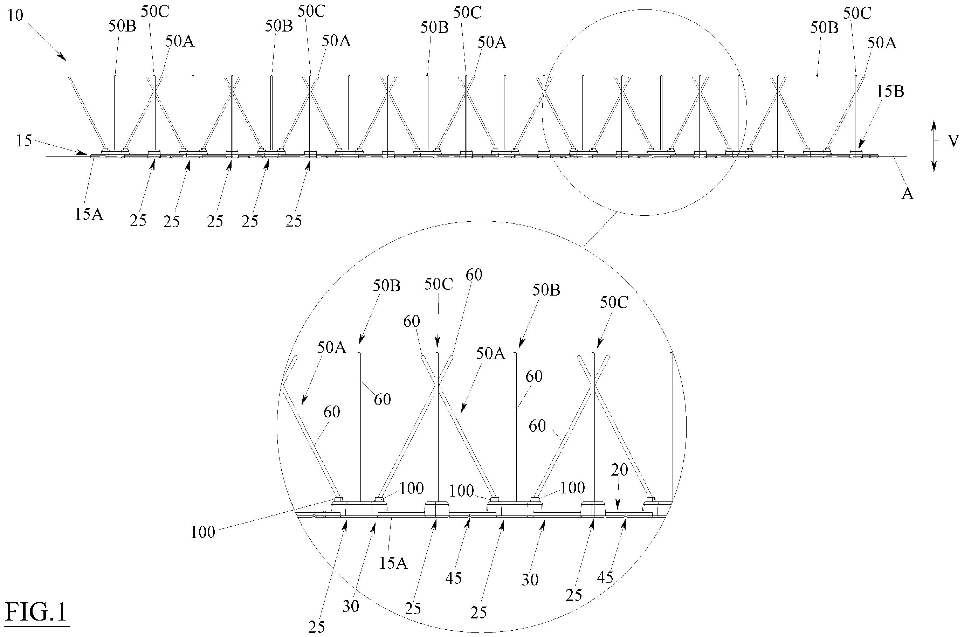

Figure 1 and an enlargement of a portion thereof.

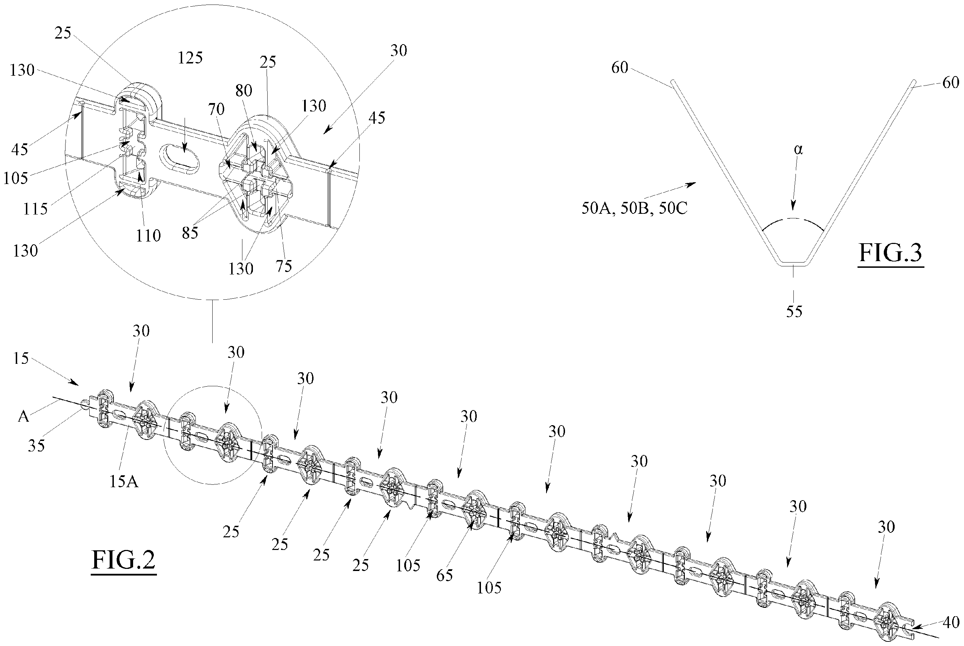

Figure 3 is a lateral front view of a repelling element of the repelling device of figure 1, wherein the repelling element is in an undeformed configuration.

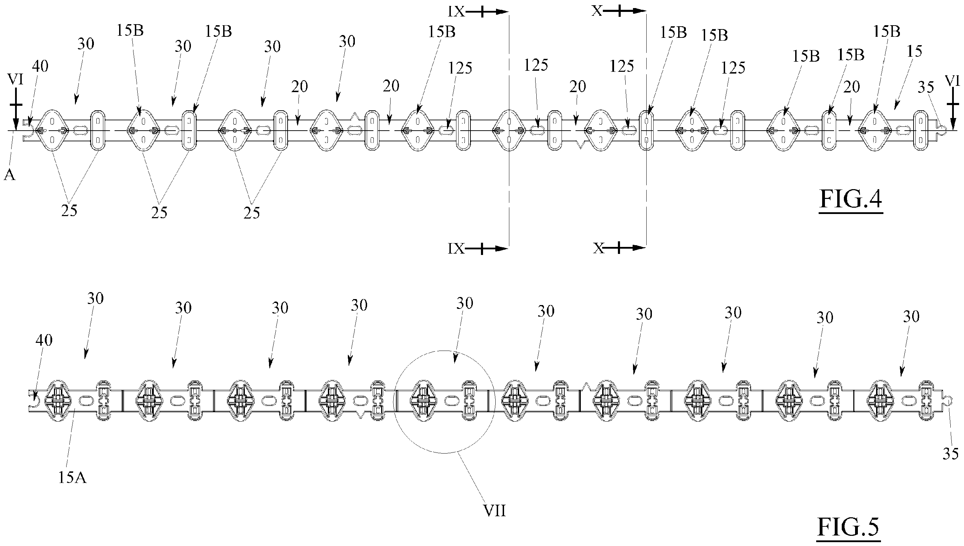

Figure 4 is a front view from above of the support base of the repelling device of Figure 1.
Figure 5 is a front view from below of the support base of the repelling device of Figure 1.

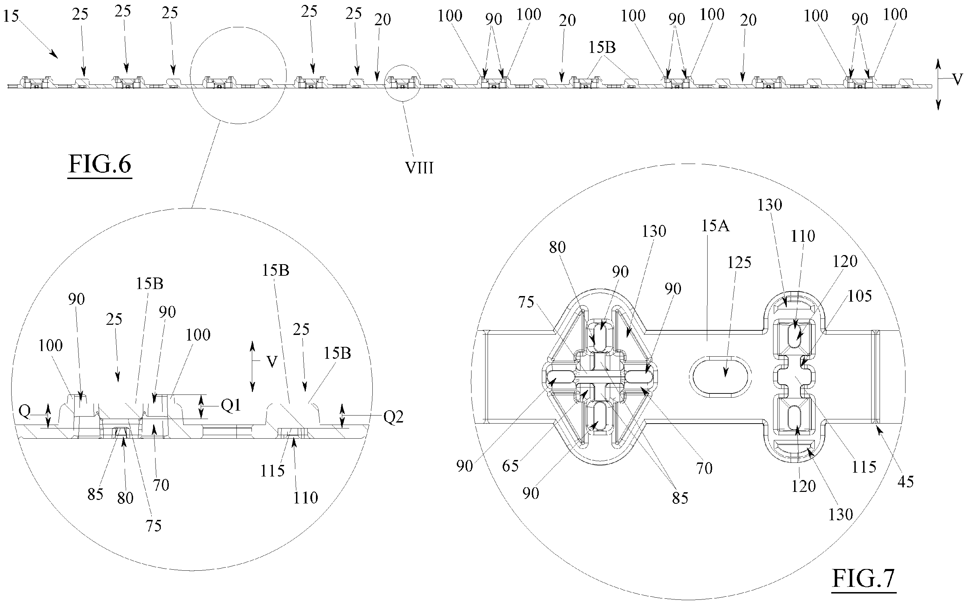

Figure 6 is a sectional view according to trace line VI-VI of Figure 4, and an enlargement of a portion in which housing seats for the connection of repelling elements to the support base can be seen.
Figure 7 is an enlarged view of the portion VII of Figure 5.

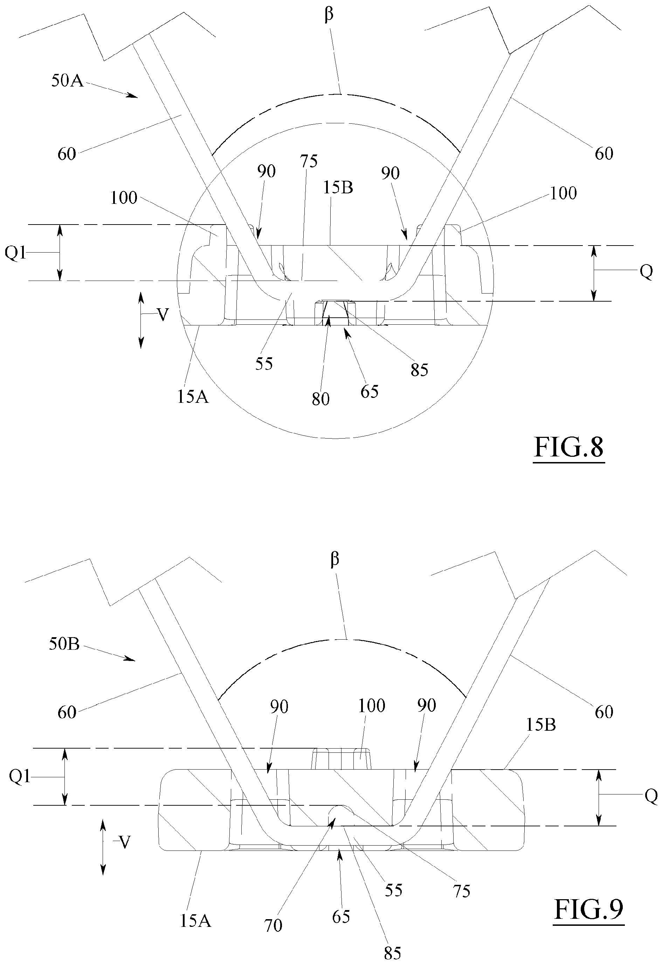

Figure 8 is an enlarged view of the portion VIII of Figure 6 with a first repelling element associated with the support base.
Figure 9 is a sectional view along trace line IX-IX of Figure 4 with a second repelling element associated with the support base.

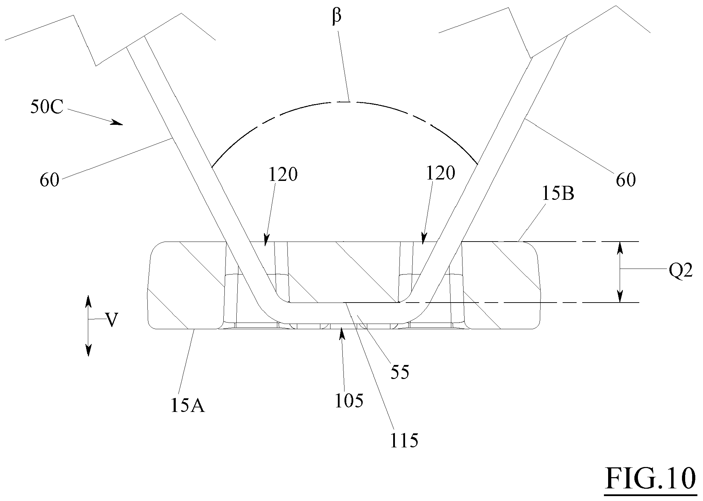

Figure 10 is a sectional view along trace line X-X of Figure 4 with a third repelling element associated with the support base.

### DETAILED DESCRIPTION

With particular reference to such figures, 10 indicates as a whole a repelling device for winged animals, particularly of the static mechanical type, adapted to prevent winged animals, such as pigeons, resting and stopping on surfaces of cornices, gutters, balconies and the like.

The repelling device 10 firstly comprises a support base 15, with an elongated shape along a longitudinal axis A, provided with a lower surface 15A substantially flat, for resting the repelling device 10 on a support surface, and an opposing free upper surface 15B. Preferably, the support base 15 has a length along such longitudinal axis A equal to 50 cm.

Particularly, the support base 15 has along the longitudinal axis A, lowered zones 20 with respect to the upper surface 15B (preferably all of the same height) which therefore define the minimum height of the support base 15 with respect to an orthogonal direction V to the lower surface 15A.

The support base 15 therefore comprises plugs 25 that define raised zones (preferably all of the same height), at which the support base 15 has a greater height with respect to said minimum height along said direction V.

The plugs 25 define the upper surface 15B of the support base 15.

Furthermore, as can be seen in Figures 1, 4 and 5, the support base 15 can have a repetitive geometric structure, comprised of a plurality of portions 30 created in an integral body that are distributed one after the other along such longitudinal axis A.

Particularly, each portion 30 can comprise a plurality of the aforesaid plugs 25 that define raised zones of the support base 15.

For example, each portion 30 comprises two plugs 25 including a first plug, e.g. with a substantially rhomboid shape with rounded corners, and a second plug, e.g. with a substantially rectangular plan with rounded edges.

In more detail, the support base 15 comprises a head portion 30, a tail portion 30 and a plurality of intermediate portions 30 interposed between the head portion 30 and the tail portion 30.

The intermediate portions 30 are preferably identical to one another (both in shape and size).

The head portion 30 and the tail portion 30, although substantially identical to the intermediate portions 30, differ from them solely due to the fact that they have a coupling element, e.g. of the snap type, which allows various support bases 15 to be connected to one another, forming a more continuous modular structure.

For example, as can be seen in Figures 4 and 5, the head portion 30 and the tail portion 30 can respectively have a tooth 35 and a seat 40 with a conjugated shape to the tooth 35, for the coupling respectively with the tail portion 30 and the head portion 30 of further support bases 15, so as to make available overall a modular structure adapted to a larger support surface.

Particularly, between one portion 30 and the other, the support base 15 can have notches 45 with a fully transversal extension, that extend starting from the lower surface 15A and are closed at the top.

Said notches 45 can have a triangular cross section shape the base of which is arranged at the lower surface 15A of the support base 15 and preferably extend starting from the lower surface 15A, for a height along the direction V comprised between 0.1 times and 0.3 times the minimum height of the support base 15 at the lowered zones 20.

The support base 15 can be created by means of moulding plastic material, preferably by means of the injection moulding of polycarbonate.

The repelling device 10 then comprises a plurality of repelling elements indicated in the figures with references 50A,50B,50C, e.g. identical (in shape and size) to one another, removably associated with the support base 15, as will be described in more detail below. Each repelling element 50A,50B,50C is substantially obtained by bending a metal rod to obtain a substantially U-shaped structure, and more precisely a tapered U-shaped structure.

Preferably, the repelling elements 50A,50B,50C are made of stainless steel.

In detail, each repelling element 50A,50B,50C has a substantially rectilinear base section 55 and two opposite and mutually diverging tips 60 that rise from the base section 55.

Preferably, each tip 60 is inclined with respect to the base section 55 by the same angle. Furthermore, the tips 60 of each repelling element 50A,50B,50C are maintained elastically and spontaneously in an undeformed configuration in which they are at a fixed mutual distance so that an opening angle α is defined between them.

Such opening angle α is smaller than a right angle, preferably comprised between 50° and 70° (including the extremes), e.g. it is 60°.

The repelling elements 50A,50B,50C are adapted to be associated with the support base 15 so that the tips 60 project above the upper surface 15B of the support base 15 itself. As can be seen in Figures 2 and 7, each portion 30 of the support base 15 therefore has a housing seat 65 obtained in the lower surface 15A of the support base 15 which is adapted to house the base sections 55 of a first repelling element 50A and of a second repelling element 50B.

Said housing seat 65 is for example made at the first plug 25 of the portion 30.

The housing seat 65 is particularly configured so that the base sections 55 of said first repelling element 50A and second repelling element 50B are arranged parallel to the lower surface 15A of the support base and further mutually transversal, e.g. orthogonal, and overlapping, with the base section 55 of the first repelling element 50A proximal to the upper surface 15B and the base section 55 of the second repelling element 50B distal from said upper surface 15B.

In other words, the base sections 55 of the first repelling element 50A and of the second repelling element 50B, when inserted into the housing seat 65, are substantially arranged like a cross, and respectively lie in a vertical plane that comprises the longitudinal axis A of the support base and in a transverse vertical plane, e.g. orthogonal, to the aforesaid longitudinal axis A of the support base.

In detail, said housing seat 65 has a first segment 70 that extends parallel to the longitudinal axis A of the support base 15 and parallel to the lower surface 15A, adapted to house the base section 55 of the first repelling element 50A.

The first segment 70 has dimensions such as to completely house the base section 55 of the first repelling element 50.

The housing seat 65 therefore has a first abutment surface 75, which closes at the top at least one intermediate section of the first segment 70 on which the base section 55 of the first repelling element 50A is placed in abutment when it is inserted within the first segment 70.

Said first abutment surface 75 is created at a distance along the direction V from the lower surface 15A of the support base 15 at least two times the thickness of the base section 55 of a repelling element 50A,50B,50C.

The base section 55 of the first repelling element 50A, when inserted into the first segment 70, is completely buried in the first plug 25, i.e. it is completely buried in the support base 15.

The housing seat 65 then has a second segment 80 which extends transversally, e.g. orthogonally, with respect to said longitudinal axis A of the support base 15, i.e. that extends transversally, e.g. orthogonally to the first segment 70, and parallel to the lower surface 15A of the support base 15.

The second segment 80 can have a depth, along the direction V, lower than the depth of the first segment 70, with respect to the lower surface 15A of the support base 15.

Said second segment 80 has dimensions such as to completely house the base section 55 of the second repelling element 50B.

The housing seat 65 therefore has a second abutment surface 85, which closes at the top one intermediate section of the second segment 80 on which the base section 55 of the second repelling element 50B is placed in abutment when it is inserted within the second segment 80.

Said second abutment surface 85 is created at a maximum distance along the direction V from the lower surface 15A of the support base 15 at least equal to the thickness of the base section 55 of the second repelling element 50B.

Furthermore, as can be seen in Figures 6 and 8, the abutment surface 85 is created at a predetermined (minimum) distance Q from the upper surface 15B of the support base 15, in the case in question at the raised zone thereof provided by the first plug 25.

Preferably, said predetermined distance Q is substantially equal to 4 mm.

The base section 55 of the second repelling element 50B, when inserted into the second segment 80, is completely buried in the first plug 25, i.e. it is completely buried in the support base 15.

Therefore, overall, the housing seat 65 has a maximum length along the direction V at least twice the thickness of the base section 55 of a repelling element 50.

Each portion 30 then has, at said first plug 25 in which the housing seat 65 is created, two pairs of slots 90, each of which extends in a through way from the upper surface 15B of the support base 15 to the housing seat 65.

The housing seat 65 and the pairs of slots 90 define overall, in this way, a cavity adapted to house the base sections 55 and at least one portion 30 of the tips 60 of the first repelling element 50A and of the second repelling element 50B, passing from the lower surface 15A to the upper surface 15B of the support base 15.

In particular, each pair of slots 90 is associated with a respective repelling element 50, and each slot of the pair is adapted to individually house a respective tip 60 of said repelling element 50.

The slots associated with the first repelling element 50A are created at opposite end sections of the first segment 70, whereas the slots associated with the second repelling element 50B are created at opposite end sections of the second segment 80.

Furthermore, the slots 90 of each pair have a longitudinal extension and are placed at a mutual distance such for which the repelling element 50A,50B associated therewith can be arranged with the tips 60 to form a smaller angle than the opening angle α that they form in the undeformed configuration.

Particularly, each slot 90 of the pair of slots associated with the second repelling element 50B is adapted to make available a rest and contact surface for the respective tip 60.

In other words, the tips 60, in an attempt to return to their undeformed configuration, remain pressed against said rest and contact surfaces of the slots 90 associated therewith. In more detail, said rest and contact surface is made available by a section of the slot 90 distal from the other slot 90 of the pair.

In practice, said sections of the slots 90 are each adapted to externally embrace the respective tip 60, i.e. they are adapted to contact the respective tip 60 externally to the angle defined between them, and the tips 60, in an attempt to return elastically into their undeformed configuration, each remain pressed on the section of the respective slot 90, so as to stably fix the position of the second repelling element 50B with respect to the support base 15.

Particularly, each slot of the pair of slots is adapted to contact the respective tip 60 of the second repelling element 50B, through said section, up to (or at) the maximum height along the direction V on which the upper surface 15B of the support base 15 is placed at the slot 90, i.e. the maximum height along the direction V of the upper surface 15B of the support base 15 at the raised zone provided by the first plug 25.

The second repelling element 50B associated with the first plug 25 is therefore arranged so that between the tips 60 a smaller angle β than the opening angle α is defined, e.g. less than about 5°.

The support base 15 therefore comprises, at each portion 30, a pair of reliefs 100 which extend in height starting from the upper surface 15B of the support base 15 itself, each at a respective slot 90 of the pair of slots associated with the first repelling element 50A. Said reliefs 100 are created in a single and integral body with the support base 15; the support base 15 and the reliefs 100 are obtained through the same material processing procedure.

In detail, each relief 100 is substantially defined by an upper collar created at a section of each slot 90 distal from the other slot 90 of the pair of slots.

As can be seen in Figure 8, each relief 100 extends in height, along the direction V and starting from the upper surface of the support base, equal to the distance between the abutment surface 75 and the second abutment surface 85 with respect to the same direction V.

In other words, each relief 100 extends to a maximum height along the direction V, such for which the first abutment surface 75 is at a distance Q1 from said maximum height to which the relief 100 extends, equal to the predetermined (minimum) distance Q between the second abutment surface 85 and the upper surface 15B of the support base 15 along the direction V.

Each relief 100 therefore defines an extension of the respective slot 90 and makes available a rest and contact surface of a portion of the tip 60 inserted therein, so as to contact said tip 60 at a greater height along the direction V with respect to the one on which the upper surface 15B of the support base 15 at the slot 90 is placed.

More precisely, each relief 100 is adapted to contact the respective tip 60 of the repelling element 50A, through said rest and contact surface, up to the maximum height to which the direction V extends.

The reliefs 100 are configured so as to contact the tips 60 of the first repelling element 50A at the same maximum contact height at which the tips 60 of the second repelling element 50B are contacted within the respective slots 90, where maximum contact height means the distance, along the direction V, between the base section 55 of each repelling element 50A,50B and the point of contact of the respective tips 60 with respect to the reliefs 100 and the slots 90 of the support base 15.

In detail, each relief 100, when the first repelling element 50A is associated with the support base 15, is adapted to externally embrace the respective tip 60, i.e. externally with respect to the angle defined between the two tips 60, and the tips 60 tending to return elastically into their undeformed configuration each remain pressed on the relief 100, i.e. on the rest and contact surface made available thereby, associated with the respective slot into which it is inserted.

In more detail, said rest and contact surface is made available by a portion of the relief 100 distal from the other relief 100 of the pair.

The slots 90 of the pair of slots associated with the first repelling element 50A with the respective reliefs 100 therefore have a longitudinal extension and are placed at a mutual distance such for which the first repelling element 50A associated therewith can be arranged with the tips 60 to form a smaller angle than the opening angle α that they form in the undeformed configuration.

More precisely, the slots 90 of the pair of slots associated with the first repelling element 50A have the same longitudinal extension as the slots 90 of the pair of slots associated with the second repelling element 50B and are placed at the same mutual distance.

Therefore, the first repelling element 50A when associated with the first plug 25, i.e. with the support base 15, is arranged so that between its tips 60 the same angle β is defined as that defined between the tips 60 of the second repelling element 50B when also said second repelling element 50B is associated with the first plug 25 i.e. with the support base 25.

As can be seen in Figure 2, each portion 30 can comprise a further housing seat 105 obtained in the lower surface 15A of the support base 15 and adapted to house the base section 55 of a third repelling element 50C.

Particularly, said further housing seat 105 is created at another plug 25 of the portion 30 adjacent to the plug on which the housing seat 65 is created, i.e. in the example illustrated in the second plug 25 of the portion 30.

The further housing seat 105 comprises a third segment 110 that extends transversally, e.g. orthogonally, to the longitudinal axis A of the support base 15 and parallel to the lower surface 15A of the support base 15, adapted to house the base section 55 of the third repelling element 50C.

Said third segment 110 has dimensions such as to completely house the base section 55 of the third repelling element 50C.

Furthermore, said third segment 110 extends starting from the lower surface 15A of the support base 15 along the direction V for a height at least equal to the thickness of the base section 55 of the third repelling element 50C itself.

The further housing seat 105 therefore has a third abutment surface 115, which closes at the top an intermediate section of the third segment 110 on which the base section 55 of the third repelling element 50C is placed in abutment when it is inserted within the third segment 110.

Said third abutment surface 115 is created at a maximum height along the direction V with respect to the height at which the lower surface 15A of the support base 15 is placed at least equal to the thickness of the base section 55 of a repelling element 50.

The base section 55 of the third repelling element 50C, when inserted into the third segment 110, is completely buried in the second plug 25, i.e. it is completely buried in the support base 15.

Furthermore, as can be seen in Figure 6, said third abutment surface 115 is created at a distance Q2 along the direction V from the maximum height at which the upper surface 15B of the support base 15 is placed at the raised zone thereof defined by the second plug 25, equal to the minimum distance Q1 defined between the first abutment surface 75 and the maximum height to which the relief 100 extends, and equal to the distance Q defined between the second abutment surface 85 and the maximum height of the upper surface 15B of the support base 15 at the raised zone thereof defined by the first plug 25. Each portion 30 then comprises, at said second plug 25 in which the further housing seat 105 is created, a further pair of slots 120, each of which extends in a through way from the support surface 15B of the support base 15 to the further housing seat 105, and the tips 60 of the third repelling element 50C are individually housed in a respective slot 120 of the further pair of slots.

The slots 120 of the further pair are created at opposing end sections of the third segment 110.

The further housing seat 105 and said further pair of through slots 120, in this way, define overall a cavity adapted to house the base sections 55 of the third repelling element 50C and at least one portion 30 of the respective tips 60, passing from the lower surface 15A to the upper surface 15B of the support base 15.

The slots 120 of the further pair are created at opposing end sections of the third segment 110.

The slots 120 of the further pair of slots extend longitudinally along an axis that is transversal, e.g. orthogonal, to the longitudinal axis A of the support base 15, i.e. they extend parallel to the slots 90 associated with the second repelling element 50B.

Furthermore, the slots 120 of the further pair have a longitudinal extension and are placed at a mutual distance such for which the third repelling element 50C associated therewith can be arranged with the tips 60 to form a smaller angle than the opening angle that they form in the undeformed configuration.

Particularly, each slot 120 of the further pair is adapted to make available a contact surface for the respective tip 60 of the third repelling element 50C.

In other words, the tips 60, in an attempt to return to their undeformed configuration, each remain pressed against said contact surfaces of the slots 120 associated therewith.

In more detail, said contact surface is made available by a section of the slot 120 distal from the other slot 120 of the further pair.

In practice, said sections of the slots 120 are each adapted to externally embrace the respective tip 60, i.e. they are adapted to contact the respective tip 60 externally to the opening angle defined between them, and the tips 60, in an attempt to return elastically into their undeformed configuration, each remain pressed on the section of the respective slot 120 into which it is inserted.

Particularly, each slot of the pair of slots is adapted to contact the respective tip 60 through said section, up to the maximum height at which the upper surface 15B of the support base 15 is placed along the direction V at the further slot 120, i.e. up to the maximum height at which the support surface 15B of the support base 15 is placed at the raised zone thereof provided by the second plug 25.

In detail, it is possible to envisage that the slots 120 of the further pair can have the same longitudinal extension and can be placed at the same mutual distance at which the slots of each pair created on the first plug 25 are placed.

Therefore, the third repelling element 50C when associated with the second plug 25, i.e. with the support base 15, is arranged so that between its tips 60 the same angle β is defined as that defined between the tips 60 of the first repelling element 50A and between the tips 60 of the second repelling element 50B when they are associated with the first plug 25 i.e. with the support base 25.

Furthermore, as can be seen in Figure 1, the support base 15 and the repelling elements are configured (i.e. sized) so that the third repelling element 50C when associated with the portion 30, i.e. with the second plug 25 thereof, is arranged so that a tip of the first repelling element 50A, precisely the tip 60 of the first repelling element 50A proximal to said further housing seat 105, is at least partially interposed between the tips 60 of said third repelling element 50C.

Again, the support base 15 and the repelling elements 50A, 50B, 50C are configured (or sized) so that the tip 60 of the first repelling element 50A associated with a portion 30 and proximal to an adjacent portion, is at least partially interposed between the tips 60 of the first repelling element 50A and between the tips 60 of the third repelling element 50C associated with said adjacent portion 30.

As can be more clearly seen in Figures 2 and 7, each portion 30 can therefore comprise a groove 125 that crosses a lowered zone 20 of the support base 15, which is adapted to house a connection element for fixing the support base 15 to the support surface.

For example, said connection element can comprise an adhesive, e.g. cyanoacrylate, preferably silicone.

As can be seen, the groove 125 is preferably created in an axially interposed position, along the longitudinal axis A of the support base 15, between the first plug 25 and the second plug 25.

Furthermore, each portion 30 can comprise a plurality of recesses 130 that extend starting from the base surface 15A and are closed at the top, each adapted to define a further housing seat for said adhesive, i.e. said connection element.

For example, said recesses 130 are created at the first plug 25 and the second plug 25. The invention thus conceived is susceptible to several modifications and variations, all falling within the scope of the inventive concept.

Moreover, all details can be replaced by other technically equivalent elements.

In practice, the materials used, as well as the contingent shapes and sizes, can be whatever according to the requirements without for this reason departing from the scope of protection of the following claims.

## Claims

1. A repelling device (10) for winged animals comprising:
- a support base (15), with an elongated shape along a longitudinal axis (A) and comprising a plurality of portions (30) created in an integral body that are distributed one after the other along such longitudinal axis (A), said support base (15) being provided with a rest lower surface (15A) and an opposing free upper surface (15B);
- a plurality of repelling elements (50A, 50B, 50C), each of which has a substantially rectilinear base section (55) and two opposite and mutually diverging tips (60) which rise from the base section (55), said repelling elements (50) being adapted to be associated with the support base (15) so that the tips (60) project upwards from the upper surface (15B) of the support base (15) itself;
and wherein each portion (30) is provided with:
- a housing seat (65) obtained in the lower surface (15A) of the support base (15) and adapted to house the base sections (55) of a first repelling element (50A) and of a second repelling element (50B) arranged mutually transversally and overlapping, with the base section (55) of the first repelling element (50A) proximal to the upper surface (15B) and the base section (55) of the second repelling element (50B) distal from said upper surface (15B), and with
- two pairs of slots (90), each of which extends in a through way from the upper surface (15B) of the support base (15) to the housing seat (65), wherein each pair of slots (90) is associated with a respective repelling element (50A,50B), the tips (60) of which are individually inserted into a respective slot (90) of the corresponding pair of slots (90), **characterised in that** each portion (30) comprises a pair of reliefs (100) that extend in height starting from the upper surface (15B) of the support base (15), each relief (100) being placed at a respective slot (90) of the pair of slots (90) associated with the first repelling element (50A) and defining an extension of the respective slot (90) itself, making available a rest and contact surface of a portion of the tip (60) inserted into it, said rest and contact surface for the respective tip (60) of the first repelling element (50A) being placed at a higher height with respect to the upper surface (15B) of the support base (15), and **in that** each slot (90) of the pair of slots associated with the second repelling element 50B) is adapted to make available a rest and contact surface for the respective tip (60), the rest and contact surface for the respective tip (60) of the second repelling element (50B) being placed at a height where the upper surface (15B) of the support base (15) is placed at the slot (90).

2. The repelling device (10) according to claim 1, wherein the reliefs (100) are configured so as to contact the tips (60) of the first repelling element (50A) at the same maximum contact height at which the tips (60) of the second repelling element (50B) are contacted within the respective slots (90), where maximum contact height means the distance, along a direction (V) orthogonal to the lower surface (15A) of the support base (15), between the base section (55) of each repelling element (50A,50B) and the point of contact of the respective tips (60) with respect to the reliefs (100) and the slots (90) of the support base (15).

3. The repelling device (10) according to claim 1, wherein the first repelling element (50A) and the second repelling element (50B), when associated with the support base (15), are arranged to form the same angle (β) between the respective tips (60).

4. The repelling device (10) according to claim 1, wherein each portion (30) comprises a further housing seat (105) obtained in the lower surface (15A) of the support base (15) and adapted to house the base section (55) of a third repelling element (50C) and a further pair of through slots (120), each of which extends from the upper surface (15B) of the support base (15) to the further housing seat (105), the tips (60) of the third repelling element (50C) being individually inserted in a respective slot (120) of the further pair of slots (120).

5. The repelling device (10) according to claim 4, wherein the third repelling element (50C), when associated with the portion (30), is arranged so that a tip (60) of the first repelling element (50A) is at least partially interposed between the tips (60) of the third repelling element (50C).

6. The repelling device (10) according to claim 4, wherein the tip (60) of the first repelling element (50A) associated with a respective portion (30) and that is distal from the third repelling element (50C) associated with the portion (30) itself, is at least partially interposed between the tips (60) of the first repelling element (50A) and of the third repelling element (50C) associated with an adjacent portion (30).

7. The repelling device (10) according to claim 1, wherein the support base (15) has a length along such longitudinal axis (A) equal to 50 cm.

8. The repelling device (10) according to claim 1, wherein between two adjacent portions (30) there is a notch (45) with a full transverse extension that extends starting from the lower surface (15A).

9. The repelling device (10) according to claim 1, wherein the support base (15) comprises a head portion (30), a tail portion (30) and a plurality of intermediate portions (30), and wherein the head portion (30) and the tail portion (30) have snap coupling elements (35,40) for the connection to further support bases (15).

10. The repelling device (10) according to claim 1, wherein each portion (30) further comprises a plurality of recesses (130) open at the lower surface (15A) and closed at the top.

11. A support base (15) for a plurality of repelling elements (50A, 50B, 50C), wherein each repelling element (50A, 50B, 50C) has a substantially rectilinear base section (55) and two opposite and mutually diverging tips (60) which rise from the base section (55), said repelling elements (50) being adapted to be associated with the support base (15) so that the tips (60) project upwards from the upper surface (15B) of the support base (15) itself,
said support base (15) being elongated along a longitudinal axis (A) and comprising a plurality of portions (30) created in an integral body that are distributed one after the other along such longitudinal axis (A), said support base (15) being provided with a lower rest surface (15A) and an opposing free upper surface (15B);
and wherein each portion (30) of the support base (15) is provided with:
- a housing seat (65) obtained in the lower surface (15A) and adapted to house the base sections (55) of a first repelling element (50A) and of a second repelling element (50B) so that they are arranged mutually transversally and overlapping, with the base section (55) of the first repelling element (50A) proximal to the upper surface (15B) and the base section (55) of the second repelling element (50B) distal from said upper surface (15B), and with
- two pairs of slots (90), each of which extends in a through way from the upper surface (15B) of the support base (15) to the housing seat (65), wherein each pair of slots (90) is adapted to be associated with a respective repelling element (50A,50B,50C), the tips (60) of which are adapted to be individually inserted into a respective slot (90) of the corresponding pair of slots (90),
**characterised in that** each portion (30) comprises a pair of reliefs (100) that extend in height starting from the upper surface (15B) of the support base (15), each relief (100) being placed at a respective slot (90) of the pair of slots (90) adapted to be associated with the first repelling element (50A) defining an extension of the respective slot (90) itself, and adapted to make available a rest and contact surface of a portion of the tip (60) adapted to be inserted into it, said rest and contact surface for the respective tip (60) of the first repelling element (50A) being placed at a higher height with respect to the upper surface (15B) of the support base (15), and **in that** each slot (90) of the pair of slots associated with the second repelling element 50B) is adapted to make available a rest and contact surface for the respective tip (60), the rest and contact surface for the respective tip (60) of the second repelling element (50B) being placed at a height where the upper surface (15B) of the support base (15) is placed at the slot (90).

## Patentansprüche

1. Abschreckvorrichtung (10) für geflügelte Tiere, umfassend:
- eine Trägerbasis (15) mit einer länglichen Form entlang einer Längsachse (A) und umfassend eine Vielzahl von in einem integralen Körper geschaffenen Abschnitten (30), die nacheinander entlang einer solchen Längsachse (A) verteilt sind, wobei die Trägerbasis (15) mit einer unteren Auflagefläche (15A) und einer gegenüberliegenden freien oberen Fläche (15B) versehen ist;
- eine Vielzahl von Abschreckelementen (50A, 50B, 50C), wovon jedes einen im Wesentlichen geradlinigen Basisbereich (55) und zwei gegenüberliegende und zueinander divergierende Spitzen (60) aufweist, die sich von dem Basisbereich (55) erheben, wobei die Abschreckelemente (50) angepasst sind, um mit der Trägerbasis (15) assoziiert zu werden, sodass die Spitzen (60) von der oberen Fläche (15B) der Trägerbasis (15) an sich nach oben hervorstehen;
und wobei jeder Abschnitt (30) mit Folgendem versehen ist:
- einem Gehäusesitz (65), der in der unteren Fläche (15A) der Trägerbasis (15) erlangt ist und angepasst ist, um die Basisbereiche (55) eines ersten Abschreckelements (50A) und eines zweiten Abschreckelements (50B) aufzunehmen, die gegenseitig quer und überlappend angeordnet sind, wobei der Basisbereich (55) des ersten Abschreckelements (50A) proximal zu der oberen Fläche (15B) und der Basisbereich (55) des zweiten Abschreckelements (50B) distal von der oberen Fläche (15B) ist, und mit
- zwei Paaren von Schlitzen (90), wovon sich jeder auf durchgehende Weise von der oberen Fläche (15B) der Trägerbasis (15) zu dem Gehäusesitz (65) erstreckt, wobei jedes Paar von Schlitzen (90) mit einem jeweiligen Abschreckelement (50A, 50B) assoziiert ist, dessen Spitzen (60) einzeln in einen jeweiligen Schlitz (90) des entsprechenden Paars von Schlitzen (90) eingesetzt sind,
**dadurch gekennzeichnet, dass** jeder Abschnitt (30) ein Paar von Reliefs (100) umfasst, die sich in der Höhe von der oberen Fläche (15B) der Trägerbasis (15) aus erstrecken, wobei jedes Relief (100) an einem jeweiligen Schlitz (90) des Paars von Schlitzen (90), die mit dem ersten Abschreckelement (50A) assoziiert sind, platziert ist und eine Verlängerung des jeweiligen Schlitzes (90) an sich definiert, was eine Auflage- und Kontaktfläche für einen Abschnitt der darin eingefügten Spitze (60) verfügbar macht, wobei die Auflage- und Kontaktfläche für die jeweilige Spitze (60) des ersten Abschreckelements (50A) in einer größeren Höhe in Bezug auf die obere Fläche (15B) der Trägerbasis (15) angeordnet ist, und dass jeder Schlitz (90) des Paars von Schlitzen, die mit dem zweiten Abschreckelement (50B) assoziiert sind, angepasst ist, um eine Auflage- und Kontaktfläche für die jeweilige Spitze (60) verfügbar zu machen, wobei die Auflage- und Kontaktfläche für die jeweilige Spitze (60) des zweiten Abschreckelements (50B) in einer Höhe platziert ist, in der die obere Fläche (15B) der Trägerbasis (15) an dem Schlitz (90) platziert ist.

2. Abschreckvorrichtung (10) nach Anspruch 1, wobei die Reliefs (100) konfiguriert sind, um die Spitzen (60) des ersten Abschreckelements (50A) auf der gleichen maximalen Kontakthöhe zu berühren, in der die Spitzen (60) des zweiten Abschreckelements (50B) innerhalb der jeweiligen Schlitze (90) berührt werden, wobei die maximale Kontakthöhe den Abstand entlang einer zu der unteren Fläche (15A) der Trägerbasis (15) orthogonalen Richtung (V) zwischen dem Basisbereich (55) von jedem Abschreckelement (50A, 50B) und dem Kontaktpunkt der jeweiligen Spitzen (60) in Bezug auf die Reliefs (100) und die Schlitze (90) der Trägerbasis (15) bedeutet.

3. Abschreckvorrichtung (10) nach Anspruch 1, wobei das erste Abschreckelement (50A) und das zweite Abschreckelement (50B), wenn sie mit der Trägerbasis (15) verbunden sind, angeordnet sind, um den gleichen Winkel (13) zwischen den jeweiligen Spitzen (60) zu bilden.

4. Abschreckvorrichtung (10) nach Anspruch 1, jeder Abschnitt (30) umfassend einen weiteren Gehäusesitz (105), der in der unteren Fläche (15A) der Trägerbasis (15) erlangt ist und zum Aufnehmen des Basisbereichs (55) eines dritten Abschreckelements (50C) angepasst ist, und ein weiteres Paar durchgehender Schlitze (120), wovon sich jeder von der oberen Fläche (15B) der Trägerbasis (15) zu dem weiteren Gehäusesitz (105) erstreckt, wobei die Spitzen (60) des dritten Abschreckelements (50C) einzeln in einen entsprechenden Schlitz (120) des weiteren Paars von Schlitzen (120) eingesetzt sind.

5. Abschreckvorrichtung (10) nach Anspruch 4, wobei das dritte Abschreckelement (50C), wenn es mit dem Abschnitt (30) assoziiert ist, angeordnet ist, sodass eine Spitze (60) des ersten Abschreckelements (50A) zumindest teilweise zwischen die Spitzen (60) des dritten Abschreckelements (50C) eingefügt ist.

6. Abschreckvorrichtung (10) nach Anspruch 4, wobei die Spitze (60) von dem ersten Abschreckelement (50A), das mit einem jeweiligen Abschnitt (30) assoziiert ist und das von dem dritten Abschreckelement (50C), das mit dem Abschnitt (30) an sich assoziiert ist, entfernt ist, zumindest teilweise zwischen die Spitzen (60) des ersten Abschreckelements (50A) und des dritten Abschreckelements (50C), das mit einem benachbarten Abschnitt (30) assoziiert ist, eingefügt ist.

7. Abschreckvorrichtung (10) nach Anspruch 1, wobei die Trägerbasis (15) eine Länge entlang solcher Längsachse (A) gleich 50 cm aufweist.

8. Abschreckvorrichtung (10) nach Anspruch 1, wobei es zwischen zwei benachbarten Abschnitten (30) eine Kerbe (45) mit voller Quererstreckung gibt, die sich von der unteren Fläche (15A) aus erstreckt.

9. Abschreckvorrichtung (10) nach Anspruch 1, wobei die Trägerbasis (15) einen Kopfabschnitt (30), einen Schwanzabschnitt (30) und eine Vielzahl von Zwischenabschnitten (30) umfasst, und wobei der Kopfabschnitt (30) und der Schwanzabschnitt (30) Einrastkupplungselemente (35, 40) zur Verbindung mit weiteren Trägerbasen (15) aufweisen.

10. Abschreckvorrichtung (10) nach Anspruch 1, wobei jeder Abschnitt (30) ferner eine Vielzahl von Aussparungen (130) aufweist, die an der unteren Fläche (15A) offen und an der Oberseite geschlossen sind.

11. Trägerbasis (15) für eine Vielzahl von Abschreckelementen (50A, 50B, 50C), wobei jedes Abschreckelement (50A, 50B, 50C) einen im Wesentlichen geradlinigen Basisbereich (55) und zwei gegenüberliegende und zueinander divergierende Spitzen (60) aufweist, die sich von dem Basisbereich (55) erheben, wobei die Abschreckelemente (50) angepasst sind, um mit der Trägerbasis (15) assoziiert zu werden, sodass die Spitzen (60) von der oberen Fläche (15B) der Trägerbasis (15) an sich nach oben hervorstehen,
wobei die Trägerbasis (15) entlang einer Längsachse (A) länglich ist und eine Vielzahl von in einem integralen Körper geschaffenen Abschnitten (30) umfasst, die nacheinander entlang einer solchen Längsachse (A) verteilt sind, wobei die Trägerbasis (15) mit einer unteren Auflagefläche (15A) und einer gegenüberliegenden freien oberen Fläche (15B) versehen ist;
und wobei jeder Abschnitt (30) der Trägerbasis (15) mit Folgendem versehen ist:
- einem Gehäusesitz (65), der in der unteren Fläche (15A) erlangt ist und angepasst ist, um die Basisabschnitte (55) eines ersten Abschreckelements (50A) und eines zweiten Abschreckelements (50B) aufzunehmen, sodass sie gegenseitig quer und überlappend angeordnet sind, wobei der Basisbereich (55) des ersten Abschreckelements (50A) proximal zu der oberen Fläche (15B) und der Basisbereich (55) des zweiten Abschreckelements (50B) distal von der oberen Fläche (15B) ist, und mit
- zwei Paaren von Schlitzen (90), wovon sich jeder auf durchgehende Weise von der oberen Fläche (15B) der Trägerbasis (15) zu dem Gehäusesitz (65) erstreckt, wobei jedes Paar von Schlitzen (90) angepasst ist, um mit einem jeweiligen Abschreckelement (50A, 50B, 50C) assoziiert zu sein, dessen Spitzen (60) angepasst sind, um einzeln in einen jeweiligen Schlitz (90) des entsprechenden Paars von Schlitzen (90) eingesetzt zu sein,
**dadurch gekennzeichnet, dass** jeder Abschnitt (30) ein Paar von Reliefs (100) umfasst, die sich in der Höhe von der oberen Fläche (15B) der Trägerbasis (15) aus erstrecken, wobei jedes Relief (100) an einem jeweiligen Schlitz (90) des Paars von Schlitzen (90) platziert ist, die angepasst sind, um mit dem ersten Abschreckelement (50A) assoziiert zu sein, was eine Verlängerung des jeweiligen Schlitzes (90) an sich definiert, und wobei es angepasst ist, um eine Auflage- und Kontaktfläche für einen Abschnitt der Spitze (60), die angepasst ist, um darin eingefügt zu werden, verfügbar zu machen, wobei die Auflage- und Kontaktfläche für die jeweilige Spitze (60) des ersten Abschreckelements (50A) in einer größeren Höhe in Bezug auf die obere Fläche (15B) der Trägerbasis (15) angeordnet ist, und dass jeder Schlitz (90) des Paars von Schlitzen, die mit dem zweiten Abschreckelement (50B) assoziiert sind, angepasst ist, um eine Auflage- und Kontaktfläche für die jeweilige Spitze (60) verfügbar zu machen, wobei die Auflage- und Kontaktfläche für die jeweilige Spitze (60) des zweiten Abschreckelements (50B) in einer Höhe platziert ist, in der die obere Fläche (15B) der Trägerbasis (15) an dem Schlitz (90) platziert ist.

## Revendications

1. Dispositif répulsif (10) pour volatiles comprenant :
- une base de soutien (15), présentant une forme allongée le long d'un axe longitudinal (A) et comprenant une pluralité de parties (30) créées dans un corps intégral qui sont distribuées l'une après l'autre le long de cet axe longitudinal (A), ladite base de soutien (15) étant pourvue d'une surface inférieure d'appui (15A) et d'une surface supérieure libre opposée (15B) ;
- plusieurs éléments répulsifs (50A, 50B, 50C), chacun présentant une section de base (55) sensiblement rectiligne et deux pointes (60) opposées et mutuellement divergentes qui s'élèvent à partir de la section de base (55), lesdits éléments répulsifs (50) étant adaptés pour être associés à la base de soutien (15) de sorte que les pointes (60) fassent saillie vers le haut à partir de la surface supérieure (15B) de la base de soutien (15) elle-même ;
et dans lequel chaque partie (30) est pourvue de :
- un siège de boîtier (65) obtenu dans la surface inférieure (15A) de la base de soutien (15) et adapté pour loger les sections de base (55) d'un premier élément répulsif (50A) et d'un deuxième élément répulsif (50B) disposés mutuellement transversalement et se chevauchant, avec la section de base (55) du premier élément répulsif (50A) proche de la surface supérieure (15B) et la section de base (55) du deuxième élément répulsif (50B) éloignée de ladite surface supérieure (15B), et avec
- deux paires de fentes (90), chacune s'étendant de manière débouchante depuis la surface supérieure (15B) de la base de soutien (15) jusqu'au siège du boîtier (65), chaque paire de fentes (90) étant associée à un élément répulsif respectif (50A, 50B), dont les pointes (60) sont insérées individuellement dans une fente respective (90) de la paire de fentes correspondante (90), **caractérisée en ce que** chaque partie (30) comprend une paire de reliefs (100) qui s'étendent en hauteur à partir de la surface supérieure (15B) de la base de support (15), chaque relief (100) étant placé dans une fente respective (90) de la paire de fentes (90) associée au premier élément répulsif (50A) et définissant un prolongement de la fente respective (90) elle-même, en mettant à disposition une surface d'appui et de contact d'une partie de la pointe (60) insérée dans celle-ci, ladite surface d'appui et de contact de la pointe respective (60) du premier élément répulsif (50A) étant placée à une hauteur plus élevée par rapport à la surface supérieure (15B) de la base de soutien (15), et **en ce que** chaque fente (90) de la paire de fentes associées au deuxième élément répulsif (50B) est adaptée pour mettre à disposition une surface d'appui et de contact de la pointe respective (60), la surface d'appui et de contact de la pointe respective (60) du deuxième élément répulsif (50B) étant placée à une hauteur permettant à la surface supérieure (15B) de la base de soutien (15) d'être placée au niveau de la fente (90).

2. Dispositif répulsif (10) selon la revendication 1, dans lequel les reliefs (100) sont configurés de manière à entrer en contact avec les pointes (60) du premier élément répulsif (50A) à la même hauteur de contact maximale que celle à laquelle les pointes (60) du deuxième élément répulsif (50B) entrent en contact à l'intérieur des fentes respectives (90), la hauteur de contact maximale étant la distance, le long d'une direction (V) orthogonale à la surface inférieure (15A) de la base de soutien (15), entre la section de base (55) de chaque élément répulsif (50A, 50B) et le point de contact des pointes respectives (60) par rapport aux reliefs (100) et aux fentes (90) de la base de soutien (15).

3. Dispositif répulsif (10) selon la revendication 1, dans lequel le premier élément répulsif (50A) et le deuxième élément répulsif (50B), lorsqu'ils sont associés à la base de soutien (15), sont disposés de manière à former le même angle (β) entre les pointes respectives (60).

4. Dispositif répulsif (10) selon la revendication 1, dans lequel chaque partie (30) comprend un autre siège de boîtier (105) obtenu dans la surface inférieure (15A) de la base de soutien (15) et adapté pour loger la section de base (55) d'un troisième élément répulsif (50C) et une autre paire de fentes débouchantes (120), chacune d'entre elles allant de la surface supérieure (15B) de la base de soutien (15) au siège de boîtier supplémentaire (105), les pointes (60) du troisième élément répulsif (50C) étant insérées individuellement dans une fente respective (120) de la paire de fentes supplémentaires (120).

5. Dispositif répulsif (10) selon la revendication 4, dans lequel le troisième élément répulsif (50C), lorsqu'il est associé à la partie (30), est disposé de telle sorte qu'une pointe (60) du premier élément répulsif (50A) est au moins en partie interposée entre les pointes (60) du troisième élément répulsif (50C).

6. Dispositif répulsif (10) selon la revendication 4, dans lequel la pointe (60) du premier élément répulsif (50A) associé à une partie (30) respective et qui est distante du troisième élément répulsif (50C) associé à la partie (30) elle-même, est au moins partiellement interposée entre les pointes (60) du premier élément répulsif (50A) et du troisième élément répulsif (50C) associé à une partie adjacente (30).

7. Dispositif répulsif (10) selon la revendication 1, dans lequel la base de soutien (15) a une longueur le long de l'axe longitudinal (A) égale à 50 cm.

8. Dispositif répulsif (10) selon la revendication 1, dans lequel entre deux parties adjacentes (30) il y a une encoche (45) à extension transversale complète qui s'étend à partir de la surface inférieure (15A).

9. Dispositif répulsif (10) selon la revendication 1, dans lequel la base de soutien (15) comprend une partie de tête (30), une partie de queue (30) et plusieurs parties intermédiaires (30), et dans lequel la partie de tête (30) et la partie de queue (30) ont des éléments de couplage à déclic (35, 40) pour la connexion à d'autres bases de soutien (15).

10. Dispositif répulsif (10) selon la revendication 1, dans lequel chaque partie (30) comprend en outre plusieurs évidements (130) ouverts sur la surface inférieure (15A) et fermés sur le dessus.

11. Base de soutien (15) pour plusieurs éléments répulsifs (50A, 50B, 50C), dans laquelle chaque élément répulsif (50A, 50B, 50C) dispose d'une section de base (55) sensiblement rectiligne et deux pointes (60) opposées et mutuellement divergentes qui s'élèvent à partir de la section de base (55), lesdits éléments répulsifs (50) étant adaptés pour être associés à la base de soutien (15) de sorte que les pointes (60) fassent saillie vers le haut à partir de la surface supérieure (15B) de la base de soutien (15) elle-même,
ladite base de soutien (15), étant allongée le long d'un axe longitudinal (A) et comprenant une pluralité de parties (30) créées dans un corps intégral qui sont distribuées l'une après l'autre le long de cet axe longitudinal (A), ladite base de soutien (15) étant pourvue d'une surface inférieure d'appui (15A) et d'une surface supérieure libre opposée (15B) ;
et dans lequel chaque partie (30) de la base de soutien (15) est pourvue de :
- un siège de boîtier (65) obtenu dans la surface inférieure (15A) et adapté pour loger les sections de base (55) d'un premier élément répulsif (50A) et d'un deuxième élément répulsif (50B) afin d'être disposés mutuellement transversalement et de façon à se chevaucher, avec la section de base (55) du premier élément répulsif (50A) proche de la surface supérieure (15B) et la section de base (55) du deuxième élément répulsif (50B) éloignée de ladite surface supérieure (15B), et avec
- deux paires de fentes (90), chacune s'étendant de manière débouchante à partir de la surface supérieure (15B) de la base de soutien (15) jusqu'au siège du boîtier (65), chaque paire de fentes (90) étant destinée à être associée à un élément répulsif respectif (50A, 50B, 50C), dont les pointes (60) sont destinées à être insérées individuellement dans une fente respective (90) de la paire correspondante de fentes (90),
**caractérisée en ce que** chaque partie (30) comprend une paire de reliefs (100) qui s'étendent en hauteur à partir de la surface supérieure (15B) de la base de support (15), chaque relief (100) étant placé dans une fente respective (90) de la paire de fentes (90) adaptée pour être associée au premier élément répulsif (50A) définissant un prolongement de la fente respective (90) elle-même, et adaptée pour mettre à disposition une surface d'appui et de contact d'une partie de la pointe (60) adaptée pour être insérée dans celle-ci, ladite surface d'appui et de contact de la pointe respective (60) du premier élément répulsif (50A) étant placée à une hauteur plus élevée par rapport à la surface supérieure (15B) de la base de soutien (15), et **en ce que** chaque fente (90) de la paire de fentes associées au deuxième élément répulsif (50B) est adaptée pour mettre à disposition une surface d'appui et de contact pour la pointe respective (60), la surface d'appui et de contact de la pointe respective (60) du deuxième élément répulsif (50B) étant placée à une hauteur permettant à la surface supérieure (15B) de la base de soutien (15) d'être placée au niveau de la fente (90).
